# FASCICULE DE BREVET EUROPEEN

(11) **EP 1 969 149 B1**
(45) Date de publication et mention de la délivrance du brevet: **29.01.2020**
(21) Numéro de dépôt: 06847143.2
(22) Date de dépôt: 26.12.2006
(51) Int. Cl.: C21D 9/56, H05B 6/36, F27D 1/12, H05B 6/02

(54) **ECRAN D'ISOLATION THERMIQUE POUR ISOLER UN INDUCTEUR ELECTROMAGNETIQUE, ET INSTALLATION DE TRAITEMENT THERMIQUE COMPORTANT UN TEL ECRAN.**
THERMISCHE ISOLIERENDE SCHIRM ZUM SCHÜTZEN EINES ELEKTROMAGNETISCHEN INDUKTORS UND AUSRÜSTUNG VON THERMISCHEN BEHANDLUNG VERSEHEN MIT SOLCHEM SCHIRM
THERMAL ISOLATION SCREEN FOR ISOLATING AN ELECTROMAGNETIC INDUCTOR, AND HEAT TREATMENT INSTALLATION COMPRISING SUCH A SCREEN

(30) Priorité: 04.01.2006 FR 0600053
(43) Date de publication de la demande: 17.09.2008
(73) Titulaire: Fives Celes, 68610 Lautenbach (FR)
(72) Inventeur: ROEHR, Philippe, 68610 Lautenbach-zell (FR); REN, Jean-Yves, 68500 Guebwiller (FR); HELLEGOUARC'H, Jean, 94170 Le Perreux Sur Marne (FR); BIGAN, Jean Louis, 91000 Evry (FR)
(74) Mandataire: IP Trust
(86) Numéro de dépôt international: PCT/FR2006/002879
(87) Numéro de publication internationale: WO 2007/077363

(56) Documents cités:
- EP-A- 1 349 431
- US-A- 6 404 799

## Description

L'invention est relative à un écran d'isolation thermique transparent au flux magnétique et refroidi destiné à isoler un inducteur électromagnétique à champ transverse ou pseudo-transverse, du rayonnement d'un produit chauffé. L'écran thermique est composé d'une matrice de pavés en matériau thermiquement isolant et d'une pluralité de tubes métalliques refroidis par circulation d'un fluide, ces tubes étant emprisonnés dans ladite matrice de pavés, les tubes et la matrice de pavés étant maintenus sur un support, situé du côté opposé au produit à chauffer.

L'invention concerne plus particulièrement, mais non exclusivement, un tel écran d'isolation thermique pour dispositif de chauffage par induction électromagnétique d'une bande métallique défilant en continu.

EP 1 349 431 montre une enceinte avec écran d'isolation thermique et support constitué par un fourreau.

Les matériaux du support sont électriquement isolants et constitués, par exemple, de : matériau composite, fibres de verre plus résine époxyde ou autre, verre, céramique. Le support de l'écran thermique ne doit pas être soumis à des températures trop élevées, typiquement inférieures à 120°C, de préférence inférieures à 90°C, en correspondance avec les matériaux utilisés pour ce support.

Les bobines électromagnétiques assurant le chauffage par induction se trouvent du côté de l'écran opposé au produit à chauffer. Pour obtenir un bon rendement énergétique, il convient que ces bobines soient le plus près possible du produit à chauffer. Il est donc souhaitable que l'épaisseur des différentes parois de l'écran soit aussi faible que possible, tout en assurant une protection thermique suffisante.

La tendance, notamment pour des raisons métallurgiques, est à augmenter la température du produit chauffé de telle sorte que les risques de faire monter la température du support de l'écran au-delà de la limite acceptable augmentent sensiblement.

Pour mieux protéger le support d'écran on peut envisager de diminuer l'écartement entre les tubes refroidis par circulation d'un fluide. Toutefois, ces tubes sont formés, de préférence, par des segments rectilignes de serpentins obtenus en cintrant plusieurs fois en sens opposé une longueur de tube. Le diamètre des tubes utilisés impose un rayon de courbure minimal pour le cintrage de telle sorte qu'il n'est pas possible de diminuer l'écartement entre les tubes en dessous d'une valeur imposée par un cintrage acceptable des tubes.

Les inconvénients des techniques antérieures d'écran thermique proviennent non seulement des problèmes technologiques de fabrication d'épingles par des tubes cintrés à 180° avec des rayons de cintrage plus petits, mais aussi des problèmes thermiques induits par la réduction de l'entraxe des tubes. Une telle réduction d'entraxe des tubes conduit à :
- augmenter les pertes thermiques, car des pertes supplémentaires se produisent dans le champ magnétique puisque la longueur de tubes se trouvant dans le champ est augmentée ;
- réduire la température de surface des pavés, ce qui peut affecter le chauffage du produit.

L'invention a donc pour but, surtout, de fournir un écran d'isolation thermique refroidi qui permette une meilleure protection thermique du support de l'écran sans augmentation sensible de l'épaisseur de la couche de matériau isolant, et sans avoir à modifier l'écartement entre les tubes refroidis par circulation d'un fluide.

Selon l'invention, un écran d'isolation thermique transparent au flux magnétique, destiné à isoler un inducteur électromagnétique à champ transverse ou pseudo-transverse, du rayonnement d'un produit chauffé, l'écran thermique étant composé d'une matrice de pavés en matériau thermiquement isolant et d'une pluralité de tubes métalliques refroidis par circulation d'un fluide, ces tubes étant emprisonnés dans ladite matrice de pavés, les tubes et les pavés étant maintenus sur un support, est caractérisé en ce que des moyens conducteurs de la chaleur sont prévus en arrière des pavés, ces moyens conducteurs étant en liaison thermique avec les tubes refroidis, lesdits moyens conducteurs de la chaleur interceptant le flux de chaleur qui traverse les pavés et l'évacuant vers les tubes refroidis.

L'écran thermique selon l'invention protège le support en réduisant la température de fonctionnement de celui-ci.

De préférence, les moyens conducteurs de la chaleur sont en outre équipés de moyens pour éviter, ou pour réduire, les pertes thermiques provenant des courants induits générés par le flux magnétique.

Les moyens conducteurs de la chaleur peuvent être en acier inoxydable, en bronze, en cuivre ou autre matériau approprié.

Les moyens conducteurs de la chaleur peuvent être formés par un écran en matériau conducteur de la chaleur, notamment métallique, en liaison thermique avec les tubes refroidis. L'écran est avantageusement constitué par des ailettes métalliques s'étendant derrière les pavés, chaque ailette étant en contact thermique avec un tube refroidi.

Les moyens pour empêcher, ou réduire, la formation des courants induits peuvent comprendre des fentes ménagées dans les moyens conducteurs. Les fentes sont orientées principalement transversalement par rapport à la direction longitudinale des tubes, mais elles peuvent aussi être inclinées.

Avantageusement, les fentes débouchent sur les bords longitudinaux de l'écran métallique et s'arrêtent au voisinage de la partie centrale.

L'optimisation de l'écran thermique est obtenue lorsque les courants induits sont extrêmement faibles. Pour cela, on prévoit des ailettes dont la surface perpendiculaire au champ magnétique est suffisamment réduite. Un bon résultat est obtenu en réduisant le pas des fentes, en jouant sur la largeur de la fente et/ou en jouant sur la largeur de l'ailette et sur son épaisseur.

Selon une variante, les ailettes peuvent être réalisées par des tronçons de fil métallique orientés radialement et fixés sur les tubes refroidis.

Chaque ailette peut s'étendre, de chaque côté d'un tube, sensiblement sur la moitié de l'intervalle entre deux tubes voisins.

Chaque ailette peut être soudée à un tube correspondant. La zone de l'ailette en contact du tube peut avoir la forme d'un berceau qui épouse une partie du contour du tube.

Les ailettes peuvent être réalisées par des fentes pratiquées dans un ensemble tube-écran métallique extrudé ou étiré en une seule pièce.

De préférence, les ailettes s'étendent suivant toute la longueur des tubes, dans la zone de l'inducteur à protéger du flux thermique.

L'invention est également relative à une installation de traitement thermique, notamment un four, comportant un inducteur électromagnétique à champ transverse ou pseudo-transverse, pour le chauffage d'un produit, caractérisée en ce qu'elle comporte, pour la protection de l'inducteur contre le rayonnement thermique du produit chauffé, au moins un écran thermique tel que défini précédemment.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est un schéma d'une installation de traitement thermique de bandes métalliques avec écran d'isolation thermique transparent au flux magnétique, selon l'invention.
Fig.2 est une coupe transversale à plus grande échelle de l'écran d'isolation thermique, avec parties arrachées.
Fig.3 est une vue en plan avec parties arrachées de l'écran d'isolation thermique.
Fig. 4 est une section transversale à plus grande échelle du détail IV de Fig.1 montrant les moyens conducteurs de la chaleur selon l'invention.
Fig.5 est une vue en élévation d'un moyen conducteur de la chaleur.
Fig. 6 est une vue en plan partielle par rapport à Fig. 5 et
Fig.7 illustre en coupe verticale une variante de réalisation d'un moyen conducteur de la chaleur.

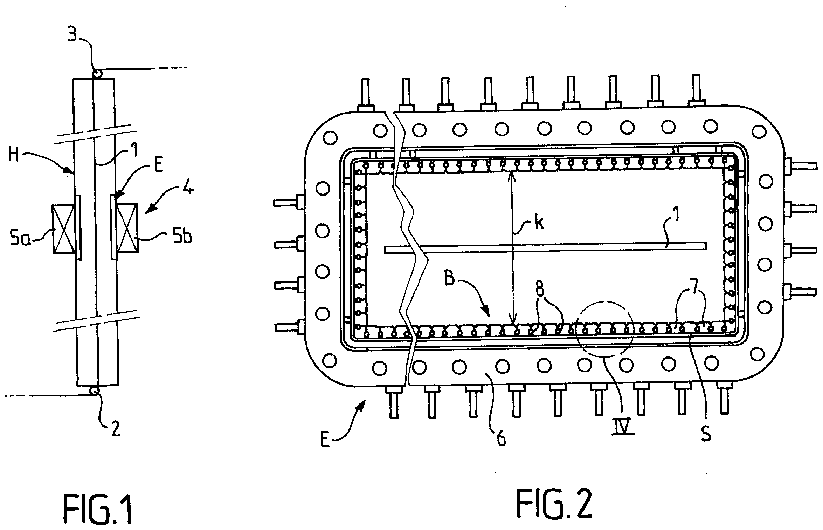

En se reportant à Fig. 1 des dessins, on peut voir schématiquement représenté un four vertical H d'une ligne de traitement thermique d'une bande métallique 1, notamment d'une bande d'acier, qui défile en continu, à vitesse constante ou variable. Dans l'exemple représenté, la bande 1 se déplace verticalement entre deux rouleaux respectivement inférieur 2 et supérieur 3. Cet exemple n'est pas limitatif, la bande 1 pourrait défiler horizontalement dans un four horizontal.

Le four a généralement une forme prismatique à section transversale rectangulaire et son volume intérieur est isolé de l'atmosphère extérieure. La composition du mélange gazeux à l'intérieur du four peut varier suivant les zones considérées. Ce mélange gazeux comprend une proportion relativement élevée d'hydrogène favorable aux échanges thermiques.

Le four H comporte au moins une section de chauffage 4 équipée, de chaque côté de la bande 1, d'un demi-inducteur à flux transverse ou pseudo-transverse 5a,5b. Un couple de demi-inducteurs constitue un inducteur de chauffage.

Au niveau des demi-inducteurs 5a,5b un écran E d'isolation thermique transparent au flux magnétique est prévu pour protéger thermiquement les inducteurs à l'égard du produit chauffé constitué par la bande 1.

Comme visible sur Fig. 2, l'écran E comporte un support 6 formé d'un matériau électriquement isolant et, notamment, étanche au gaz. Le support 6 est avantageusement réalisé en matériau composite avec résine époxyde ou similaire.

La dimension minimale k (Fig.2) de l'espace entre des faces en regard de l'écran E, suivant la direction orthogonale à la bande 1, est imposée par des considérations visant à éviter tout contact entre la bande et la surface interne de l'écran. Cette dimension k peut être de l'ordre de vingt centimètres.

Les faces internes du support 6 supportent et maintiennent, par des moyens de fixation non représentés, une matrice B de pavés 7 en matériau thermiquement isolant, notamment en céramique, et une pluralité de tubes 8 refroidis par circulation d'un fluide, généralement de l'eau. Les tubes 8 sont généralement métalliques, mais pourraient être en une autre matière, par exemple en verre totalement transparent au champ magnétique. Les tubes 8 sont emprisonnés dans la matrice de pavés 7 et protégés contre le rayonnement direct de la bande 1.

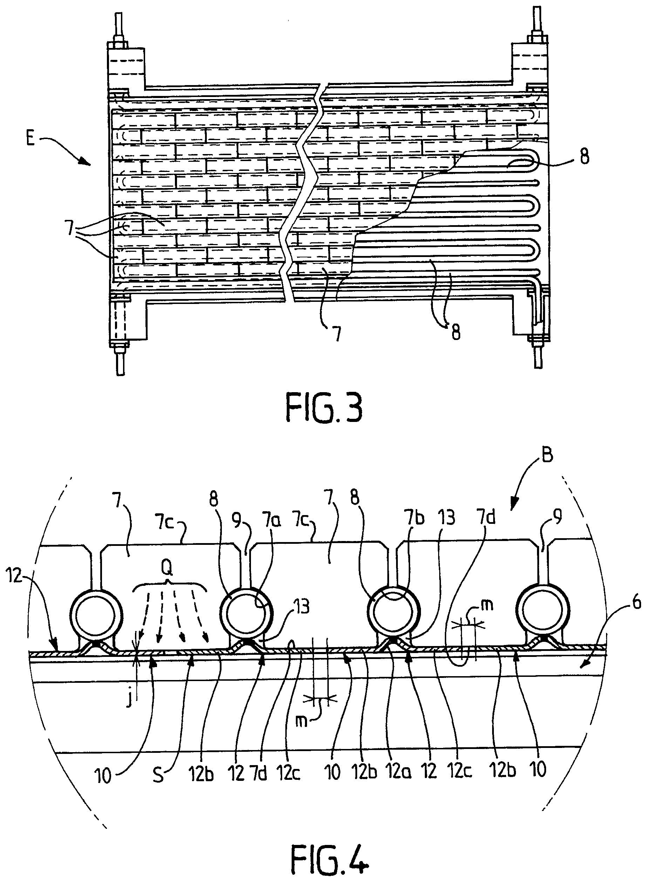

Les tubes 8 sont constitués de préférence par des segments rectilignes. Selon l'exemple de Fig.3 les tubes 8 sont des segments d'un serpentin continu, obtenu par cintrage successifs à 180° en sens opposés d'un tube. Une entrée et une sortie de fluide de refroidissement est prévue pour chaque serpentin. Plusieurs serpentins constituant des panneaux successifs peuvent être juxtaposés contre la paroi interne du support 6. Le diamètre interne des tubes 8 est de l'ordre de huit à dix millimètres.

Les pavés 7, comme visibles sur Fig. 2 et 4, sont constitués par des blocs sensiblement parallélépipédiques rectangles dont les deux faces longitudinales comportent des évidements 7a,7b en forme de portions cylindriques propres à épouser le contour de deux tubes 8 successifs. Les pavés 7 peuvent ainsi être engagés entre deux tubes 8 rectilignes. Les pavés 7 sont en appui les uns contre les autres suivant la direction longitudinale des tubes 8. Un espace réduit 9 (Fig. 4) peut subsister transversalement entre deux pavés voisins 7.

La face avant 7c des pavés 7 est celle directement exposée au rayonnement thermique de la bande 1. La face arrière 7d des pavés, qui est la face la plus éloignée de la bande 1, se trouve à une température nettement inférieure à celle de la face 7c en raison de la résistance thermique opposée par le pavé 7 et de l'évacuation de chaleur assurée par les tubes 8 et le fluide de refroidissement.

Pour un rendement énergétique maximal du chauffage de la bande 1 par induction électromagnétique à flux transverse ou pseudo-transverse, il est souhaitable de placer les inducteurs aussi près que possible de la bande 1. Lorsque la température de traitement de la bande 1 augmente, le support 6 risque d'être soumis à une température trop élevée.

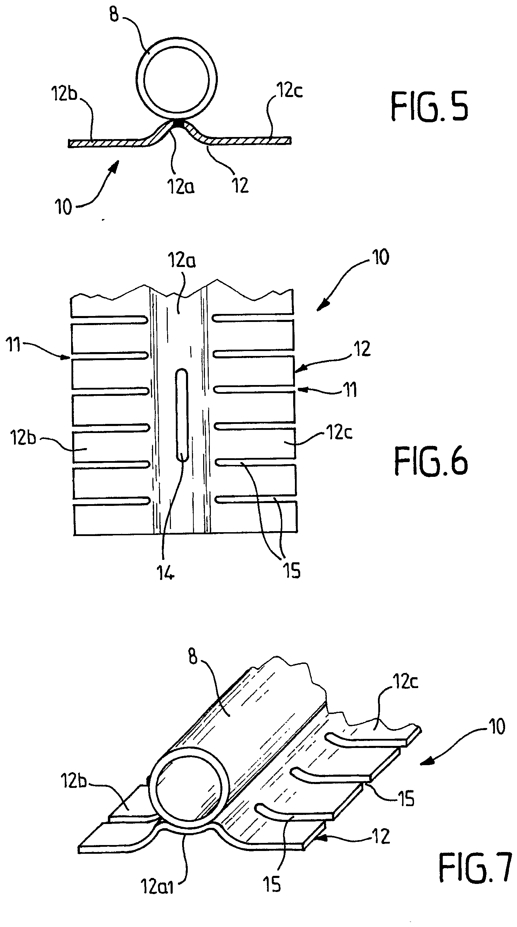

Pour assurer une protection thermique efficace du support 6, sans augmenter l'épaisseur des pavés isolants 7, et sans diminuer l'écartement entre les tubes 8 successifs, selon l'invention on prévoit, à la face arrière 7d des pavés, des moyens 10 conducteurs de la chaleur disposés pour intercepter le flux de chaleur Q traversant les pavés 7. Ces moyens conducteurs 10 sont en liaison thermique avec les tubes refroidis 8 pour évacuer le flux de chaleur Q vers les tubes et vers le liquide de refroidissement circulant dans les tubes. En outre, les moyens conducteurs 10 sont équipés, comme illustré sur Fig.6, de moyens 11 pour empêcher ou réduire la formation de courants induits générés par le flux électromagnétique alternatif transverse.

De préférence, les moyens conducteurs 10 sont constitués par un écran métallique S d'épaisseur j (Fig.4) réduite, notamment inférieure à cinq millimètres. L'écran S recouvre la majeure partie des faces arrière 7d des pavés.

L'écran métallique S est constitué par un ensemble d'ailettes métalliques 12 distinctes les unes des autres. A chaque tube 8 sont associées des ailette métalliques 12 recouvrant la face arrière 7d des pavés, chaque ailette étant en contact thermique avec le tube associé 8 refroidi. Les termes « drain » ou « tire-chaleur» pourraient être utilisés comme synonymes à la place du terme « ailette ».

Chaque ailette 12 est formée par une bande métallique s'étendant de préférence suivant toute la longueur du tube 8. La bande comporte une partie longitudinale centrale en saillie 12a engagée dans un espace libre 13 entre les bords arrière de deux pavés 7 successifs. La partie centrale 12a vient en contact avec la paroi du tube 8 auquel elle est de préférence soudée. La bande métallique s'étend de part et d'autre de la partie centrale 12a de manière symétrique, ou asymétrique, suivant des lames 12b, 12c arrivant sensiblement à mi-largeur de chaque bloc 7. Une telle disposition permet de limiter la longueur du trajet d'évacuation de la chaleur vers le tube 8 à sensiblement la moitié de la largeur d'un bloc 7. Les bords des lames 12b, 12c de deux ailettes successives sont séparés par un intervalle de largeur m (Fig.4) réduite, notamment inférieure à cinq millimètres, et de préférence inférieure à deux millimètres. La face arrière 7d de chaque pavé est ainsi pratiquement entièrement recouverte par des ailettes 12.

Selon l'exemple de Fig.2, la section transversale de l'écran thermique présente un contour fermé sensiblement rectangulaire. Cet exemple n'est pas limitatif. L'écran thermique peut être constitué, de chaque côté de la bande, par une plaque ayant plusieurs couches (pavés isolants, tubes refroidis, moyens conducteurs). Dans ce cas, la section transversale de l'écran serait un segment rectiligne, tel que représenté sur Fig.4. Un écran thermique en forme de plaque, conforme à l'invention, convient particulièrement pour des installations telles que celles visées dans les demandes de brevet FR 05 06462 et FR 05 06463, déposées le 24 juin 2005 par la même société déposante CELES.

Selon l'exemple de réalisation de Fig. 4, la partie centrale 12a de l'ailette a la forme d'un dôme tournant sa convexité vers le tube 8 et comportant des ouvertures oblongues 14 pour la soudure.

En variante, comme illustré sur Fig. 7, la partie centrale en saillie 12a1 présente une concavité formant un berceau pour épouser la partie en vis à vis du tube 8 et assurer une plus grande surface de contact pour la transmission de la chaleur.

Selon une autre variante, les ailettes peuvent être réalisées par des fentes pratiquées dans un ensemble [tube 8 -écran métallique S] extrudé ou étiré en une seule pièce.

Les moyens 11 pour empêcher, ou réduire, la formation de courants induits générés par le flux magnétique comprennent de préférence des fentes 15, ménagées dans les ailettes 12. Les fentes sont orientées principalement transversalement par rapport à la direction longitudinale des ailettes, comme illustré sur Fig.6, mais elles peuvent aussi être inclinées. Les fentes 15, parallèles entre elles, débouchent sur les bords longitudinaux de l'écran métallique S et sont fermées au voisinage de la partie centrale 12a.

L'optimisation de l'écran thermique est obtenue lorsque les courants induits sont extrêmement faibles. Pour cela, on prévoit des ailettes dont la surface perpendiculaire au champ magnétique est suffisamment réduite. Un bon résultat est obtenu en réduisant le pas des fentes, en jouant sur la largeur de la fente, notamment sur l'épaisseur d'un trait de scie constituant la fente, et/ou en jouant sur la largeur de l'ailette et l'épaisseur. Selon un exemple, la largeur de fente est 0.5mm , la largeur d'ailette entre deux fentes est adaptée aux pertes électriques des courants induits dans cette ailette.

En variante, les ailettes peuvent être réalisées par des tronçons de fil métallique. Les tronçons de fil sont orientés transversalement, radialement ou en oblique, par rapport aux tubes de refroidissement 8, et sont fixés, notamment soudés, aux tubes 8, l'ensemble rappelant un peigne dont les dents seraient formées par les tronçons de fil. Le diamètre du fil peut être de 1mm avec un écart entre chaque fil de 0.3mm, cet écart constituant la fente 15.

L'ailette 12, vue de dessus comme illustré sur Fig. 6, a une forme qui rappelle celle d'une arête de poisson.

La présence des fentes 15, en réduisant fortement les courants induits générés par le flux magnétique, permet de réduire un échauffement parasite entraînant une baisse de rendement énergétique.

Les tubes 8 et/ou les ailettes 12 sont avantageusement réalisés en acier inoxydable. En variante, les tubes 8 et/ou les ailettes 12 sont réalisés en bronze ou en cuivre, d'autres métaux pouvant également être envisagés.

Le fonctionnement résulte des explications qui précèdent.

Le champ magnétique alternatif transverse permet de chauffer la bande 1 qui rayonne de la chaleur vers les surfaces qui entourent cette bande. Le flux de chaleur Q qui traverse les pavés 7 pour atteindre la face arrière 7d est intercepté pour sa majeure partie par les ailettes 12 et évacué vers les tubes 8 et le fluide de refroidissement. Le support 6 se trouve davantage protégé contre l'échauffement qui serait dû à ce flux Q.

L'invention permet, sans augmenter sensiblement l'épaisseur de l'écran thermique E et sans modifier l'écartement des tubes 8, d'assurer une protection thermique efficace du support 6 pour des températures de bande 1 élevées, notamment de 1150°C.

Bien que la description ait été effectuée à propos d'une bande 1, l'invention s'applique à d'autres types de produits métalliques, notamment fils d'acier, de cuivre, d'aluminium, ou plaques. Le produit peut défiler ou non.

## Revendications

1. Ecran d'isolation thermique transparent au flux magnétique, destiné à isoler un inducteur électromagnétique à champ transverse ou pseudo-transverse, du rayonnement d'un produit chauffé (1), l'écran thermique étant composé d'une matrice de pavés (7) en matériau thermiquement isolant et d'une pluralité de tubes (8) refroidis par circulation d'un fluide, ces tubes étant emprisonnés dans ladite matrice de pavés, les tubes et les pavés étant maintenus sur un support (6), **caractérisé en ce qu'**il comporte, des écrans (10) en matériau conducteurs de la chaleur disposés pour intercepter le flux de chaleur traversant les pavés, les écrans en matériau conducteurs de la chaleur étant disposés entre l'arrière des pavés et le support (6), ces écrans en matériau conducteurs étant en liaison thermique avec les tubes (8) refroidis pour évacuer le flux de chaleur vers les tubes.

2. Ecran d'isolation thermique selon la revendication 1, dans lequel les écrans (10) en matériau conducteurs de la chaleur sont équipés de moyens (11) pour empêcher, ou réduire, la formation de courants induits par le flux magnétique.

3. Ecran d'isolation thermique selon la revendication 1 ou 2, dans lequel les écrans (10) en matériau conducteurs de la chaleur sont formés par un écran métallique (S) en liaison thermique avec les tubes refroidis (8).

4. Écran d'isolation thermique selon la revendication 3, dans lequel l'écran métallique (S) est constitué par des ailettes métalliques (12) s'étendant à l'arrière des pavés, chaque ailette (12) étant en contact thermique avec un tube refroidi (8).

5. Écran d'isolation thermique selon la revendication 4, dans lequel les ailettes sont réalisées par des tronçons de fil métallique fixés sur les tubes de refroidissement.

6. Écran d'isolation thermique selon l'une quelconque des revendications précédentes, dans lequel les moyens (11) pour empêcher, ou réduire, la formation de courants induits générés par le flux magnétique comprennent des fentes (15) ménagées dans les écrans en matériau conducteurs (10).

7. Écran d'isolation thermique selon la revendication 6, dans lequel les fentes (15) sont orientées transversalement par rapport à la direction longitudinale des tubes (8).

8. Écran d'isolation thermique selon l'ensemble de la revendication 4 et de l'une des revendications 6 ou 7, dans lequel les fentes (15) débouchent sur les bords longitudinaux de l'écran métallique et sont fermées au voisinage de la partie centrale.

9. Écran d'isolation thermique selon la revendication 4, dans lequel chaque ailette (12) s'étend de part et d'autre d'un tube (8).

10. Écran d'isolation thermique selon la revendication 9, dans lequel chaque ailette (12) s'étend, de chaque côté d'un tube (8), sensiblement sur la moitié de l'intervalle entre deux tubes (8) voisins.

11. Écran d'isolation thermique selon l'une des revendications 4 à 10, dans lequel chaque ailette (12) est soudée à un tube (8).

12. Écran d'isolation thermique selon l'une des revendications 4 à 10, dans lequel les ailettes sont réalisées par des fentes pratiquées dans un ensemble tube-écran métallique extrudé ou étiré en une seule pièce.

13. Écran d'isolation thermique selon la revendication 4, dans lequel la zone de l'ailette adjacente au tube a la forme d'un berceau (12a1) qui épouse une partie du contour du tube.

14. Écran d'isolation thermique selon la revendication 4, dans lequel les ailettes (12) sont prévues suivant toute la longueur des tubes, dans la zone de l'inducteur à protéger du flux thermique.

15. Installation de traitement thermique, notamment four, comportant un inducteur électromagnétique à champ transverse ou pseudo-transverse, pour le chauffage d'un produit, **caractérisée en ce qu'**elle comporte, pour la protection de l'inducteur contre le rayonnement thermique du produit chauffé, au moins un écran thermique (E) selon l'une des revendications précédentes.

## Patentansprüche

1. Magnetstromdurchlässige Wärmeabschirmung, die dazu bestimmt ist, einen elektromagnetischen Induktor mit transversalem oder pseudo-transversalem Feld vor der Strahlung eines erhitzten Produkts (1) zu isolieren, wobei die Wärmeabschirmung aus einer Matrix von Blöcken (7) aus wärmeisolierendem Material und einer Vielzahl von Rohren (8) besteht, die durch Umlauf eines Fluids gekühlt werden, wobei diese Rohre in der Matrix von Blöcken eingeschlossen sind, wobei die Rohre und Blöcke auf einem Träger (6) gehalten werden, **dadurch gekennzeichnet, dass** sie Schirme (10) aus wärmeleitendem Material umfasst, die so angeordnet sind, dass sie den durch die Blöcke strömenden Wärmestrom abfangen, wobei die Schirme aus wärmeleitendem Material zwischen der Rückseite der Blöcke und dem Träger (6) angeordnet sind, und diese Schirme aus leitendem Material in thermischer Verbindung mit den gekühlten Rohren (8) stehen, um den Wärmestrom zu den Rohren abzuleiten.

2. Wärmeabschirmung nach Anspruch 1, bei der die Schirme (10) aus wärmeleitendem Material mit Mitteln (11) zur Verhinderung oder Verringerung der Bildung von Strömen versehen sind, die durch den magnetischen Fluss induziert werden.

3. Wärmeabschirmung nach Anspruch 1 oder 2, bei der die Schirme (10) aus wärmeleitendem Material durch eine Metallabschirmung (S) gebildet werden, der in thermischer Verbindung mit den gekühlten Rohren (8) steht.

4. Wärmeabschirmung nach Anspruch 3, bei der die Metallabschirmung (S) aus Metallrippen (12) besteht, die sich hinter den Blöcken erstrecken, wobei jede Rippe (12) in thermischem Kontakt mit einem gekühlten Rohr (8) steht.

5. Wärmeabschirmung nach Anspruch 4, bei der die Rippen aus Drahtabschnitten bestehen, die auf den Kühlrohren befestigt sind.

6. Wärmeabschirmung nach einem der vorhergehenden Ansprüche, bei der die Mittel (11) zur Verhinderung oder Verringerung der Bildung von Induktionsströmen, die durch den magnetischen Fluss erzeugt werden, Schlitze (15) umfassen, die in den Schirmen aus leitfähigem Material (10) ausgebildet sind.

7. Wärmeabschirmung nach Anspruch 6, bei der die Schlitze (15) quer zur Längsrichtung der Rohre (8) ausgerichtet sind.

8. Wärmeabschirmung nach Anspruch 4 und Anspruch 6 oder 7, bei der die Schlitze (15) bis zu den Längskanten der Metallabschirmung geführt werden und in der Nähe des Mittelteils geschlossen sind.

9. Wärmeabschirmung nach Anspruch 4, bei der sich jede Rippe (12) zu beiden Seiten eines Rohres (8) erstreckt.

10. Wärmeabschirmung nach Anspruch 9, bei der sich jede Rippe (12) auf jeder Seite eines Rohres (8) im Wesentlichen bis zur Hälfte des Zwischenraums zwischen zwei benachbarten Rohren (8) erstreckt.

11. Wärmeabschirmung nach einem der Ansprüche 4 bis 10, bei dem jede Rippe (12) an ein Rohr (8) geschweißt ist.

12. Wärmeabschirmung nach einem der Ansprüche 4 bis 10, bei dem die Rippen durch Schlitze gebildet werden, die in einer, in einem Stück stranggegossenen oder gezogenen Rohr-Metallabschirmungs-Einheit ausgebildet werden.

13. Wärmeabschirmung nach Anspruch 4, bei dem der an das Rohr angrenzende Rippenbereich die Form einer Bettung (12a1) hat, die der Form eines Teils der Rohrkontur entspricht.

14. Wärmeabschirmung nach Anspruch 4, bei der die Rippen (12) in der gesamten Länge der Rohre im Bereich des Induktors vorgesehen sind, der vor dem Wärmefluss zu schützen ist.

15. Wärmebehandlungsanlage, insbesondere ein Ofen, die einen elektromagnetischen Induktor mit einem transversalen oder pseudo-transversalen Feld zum Erhitzen eines Produkts umfasst, **dadurch gekennzeichnet, dass** sie zum Schutz des Induktors vor der Wärmestrahlung des erhitzten Produkts mindestens eine Wärmeabschirmung (E) nach einem der vorhergehenden Ansprüche umfasst.

## Claims

1. Thermal insulation screen transparent to magnetic flux, intended to isolate an electromagnetic inductor with a transverse or pseudo-transverse field from the radiation of a heated product (1), the thermal screen being made up of a matrix of blocks (7) made of a thermally insulating material and of a plurality of tubes (8) cooled by the circulation of a fluid, these tubes being imprisoned in said matrix of blocks, the tubes and the blocks being held in place by a support (6), **characterized in that** it includes screens (10) in heat-conducting material placed so as to intercept the heat flux passing through the blocks, the screens (10) in heat-conducting material being placed between the back the blocks and the support (6), these screens in conducting material being thermally coupled to the cooled tubes (8) for discharging the heat flux into the tubes.

2. Thermal insulation screen according to claim 1, wherein the screens (10) in heat-conducting material are equipped with means (11) for preventing, or reducing, the formation of currents induced by the magnetic flux.

3. Thermal insulation screen according to claim 1 or 2, wherein the screens (10) in heat-conducting means are formed by a metal screen (S) thermally coupled to the cooled tubes (8).

4. Thermal insulation screen according to claim 3, wherein the metal screen (S) is formed by metal fins (12) that extend to the rear of the blocks, each fin (12) being in thermal contact with a cooled tube (8).

5. Thermal insulation screen according to claim 4, wherein the fins are produced by lengths of metal wire that are fixed to the cooling tubes.

6. Thermal insulation screen according to any one of preceding claims, wherein the means (11) for preventing, or reducing, the formation of induced currents generated by the magnetic flux comprise slots (15) made in the screens in conducting material (10).

7. Thermal insulation screen according to claim 6, wherein the slots (15) are oriented transversely to the longitudinal direction of the tubes (8).

8. Thermal insulation screen according to the claim 4 and one of claims 6 or 7, wherein the slots (15) open onto the longitudinal edges of the metal screen and are closed near the central portion.

9. Thermal insulation screen according to claim 4, wherein each fin (12) extends on either side of a tube (8).

10. Thermal insulation screen according to claim 9, wherein each fin (12) extends, on each side of a tube (8), over substantially half the gap between two adjacent tubes (8).

11. Thermal insulation screen according to any one of claims 4 to 10, wherein each fin (12) is welded to a tube (8).

12. Thermal insulation screen according to any one of claims 4 to 10, wherein the fins are formed by slots made in an extruded or drawn metal screen/tube assembly made as a single part.

13. Thermal insulation screen according to claim 4, wherein the region of the fin adjacent to the tube has the form of a cradle (12a1) that follows a portion of the contour of the tube.

14. Thermal insulation screen according to claim 4, wherein the fins (12) are provided over the entire length of the tubes, in the region of the inductor to be protected from the heat flux.

15. Heat treatment installation, especially a furnace, which includes an electromagnetic inductor having a transverse or pseudo-transverse field, for heating a product, **characterized in that** it includes, for protecting the inductor against the thermal radiation of the heated product, at least one thermal screen (E) according to one of the preceding claims.
